# NEW EUROPEAN PATENT SPECIFICATION

(11) **EP 0 356 716 B2**
(45) Date of publication and mention of the opposition decision: **18.10.1995**
(45) Mention of the grant of the patent: 30.12.1992
(21) Application number: 89113956.0
(22) Date of filing: 28.07.1989
(51) Int. Cl.: B60H 1/00

(54) **Automotive air conditioning system**
Fahrzeugklimaanlage
Système de climatisation de véhicule

(30) Priority: 29.07.1988 JP 188394/88
(43) Date of publication of application: 07.03.1990
(73) Proprietor: SANDEN CORPORATION, Isesaki-shi Gunma, 372 (JP)
(72) Inventor: Sakano, Riichi, Osato-gun Saitama, 369-02 (JP)
(74) Representative: Prüfer, Lutz H., Dipl.-Phys.

(56) References cited:
- EP-A- 0 257 017
- DE-A- 2 627 734
- US-A- 4 412 425
- US-A- 4 688 394
- PATENT ABSTRACTS OF JAPAN, vol. 7, no. 24 (M-189)[1169], 29th January 1983; & JP-A-57 178 913 (DIESEL KIKI K.K.) 04-11-1982
- PATENT ABSTRACTS OF JAPAN, vol. 10, no. 204 (M-499)[2260], 17th July 1986; JP-A-61 46 710 (NIPPON DENSO CO. LTD) 07-03-1986

## Description

This invention generally relates to an automobile air conditioning and heating system.

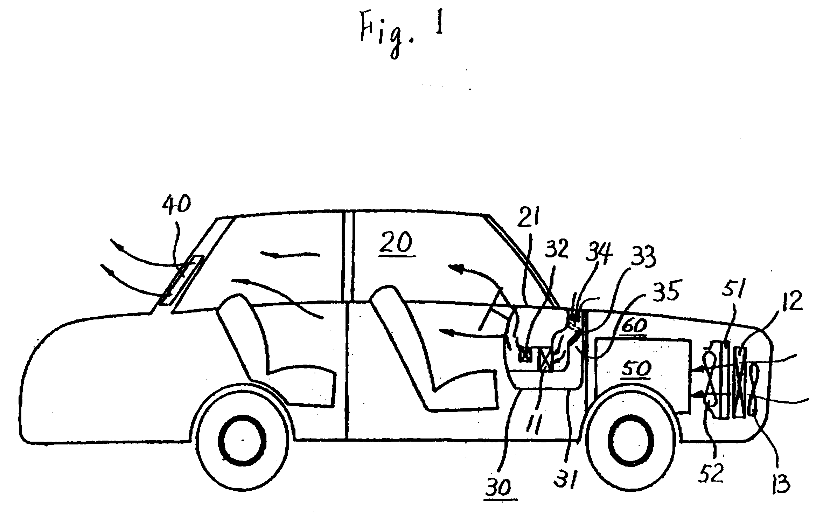

A conventional type of an automotive air conditioning and heating system is schematically illustrated in Figure 1. The automotive air conditioning and heating system includes a refrigerating circuit comprising a first heat exchanger, a compressor, a second heat exchanger and a receiver-drier each of which is connected by a pipe member in series. A thermal expansion valve is disposed between the receiver-drier and the first heat exchanger.

With reference to Figure 1, the first heat exchanger, for example, evaporator 11 is disposed in passenger compartment 20 of an automobile, more precisely, in duct assembly 30 which is located under dashboard 21 of the automobile. Duct assembly 30 includes duct 31 in which evaporator 11, heater core 32 and a blower (not shown) are disposed in. Damper 33 is also disposed in duct 31 and selectively opens and closes outside air inlet opening 34 and passenger compartment air inlet opening 35 by pivoting thereof. In Figure 1, damper 33 closes passenger compartment air inlet opening 35, that is, opens outside air inlet opening 34. Therefore, the blower is only used for introducing the outside air into duct 31 through outside air inlet opening 34. Heater core 32 is used for a heat source of the heating system by utilizing heat of engine 50.

The second heat exchanger, for example, condenser 12 is disposed in engine compartment 60 defined at a front portion of the automobile, more precisely, at in front of radiator 51. Outside air is conducted into engine compartment 60 and is passed through condenser 12 and radiator 51 by operation of condenser fan 13 and radiator fan 52. Accordingly, refrigerant in condenser 12 flowing from the compressor (not shown) is heat exchanged with the outside air, that is, refrigerant is condensed by radiating heat thereof into the outside air.

In above structure, when passenger compartment 20 is demanded to cool, the outside air is continuously introduced into duct 31 through outside air inlet opening 34 and is passed through evaporator 11 by operation of the blower. Consequently, the outside air is heat exchanged with the refrigerant in evaporator 11, that is, the refrigerant in evaporator 11 is vaporized by absorbing heat thereto from the outside air. Accordingly, the outside air is cooled and blown into passenger compartment 20, thereby passenger compartment 20 being cooled. Finally, the air in passenger compartment 20 is continuously flowed to the outside automobile through ventilator 40 formed at both rear quarter panels of the automobile. In this situation, heater core 32 is maintained its operation being stopped. The other hand, when passenger compartment 20 is demanded to warm, the outside air is continuously introduced into duct 31 through outside air inlet opening 34 and is passed through heater core 32 by operation of the blower. Consequently, the outside air is heat exchanged with heater core 32. Accordingly, the outside air is warmed and blown into passenger compartment 20, thereby the air in passenger compartment 20 being warmed. Finally, the air in passenger compartment 20 is continuously flowed to the outside automobile through ventilation 40 formed at both rear quarter panels of the automobile. In this situation, the air condition system is maintained its operation being stopped.

Above paragraphs only mention about the outside air inlet mode, that is, the situation in which outside air inlet opening 34 is only opened, however, the above-mentioned conventional type of automotive air conditioning and heating system can take other two modes one of which is the passenger compartment air inlet mode, another of which is the mixed air inlet mode. The passenger compartment air inlet mode means the situation in which passenger compartment air inlet opening 35 is only opened, that is, outside air inlet opening 34 is closed by damper 33 as illustrated by a dashed line in Figure 1. The mixed air inlet mode means the situation in which both outside air inlet opening 34 and passenger compartment air inlet opening 35 are maintained to open.

In the air conditioning stage with the passenger compartment air inlet mode, humidity in passenger compartment 20 is extremely decreased due to only the passenger compartment air circulating in passenger compartment 20, thereby the passengers feeling discomfort. Additionally, in the heating stage with the passenger compartment air inlet mode, the inside surface of the window glasses of the automobile is clouded due to only the passenger compartment air circulating in passenger compartment 20, thereby preventing safety for driving the automobile. Therefore, in both the air conditioning and the heating stages, to prevent the above defects, it is desirable to use the outside air inlet mode as much time as possible in order to continuously introduce the fresh outside air into passenger compartment 20.

However, in this prior art, when the air conditioning and heating system operates in the outside air inlet mode, the cooled (in the air conditioning stage) or heated (in the heating stage) passenger compartment air, of which amount is equal to the amount of the outside air introduced into the passenger compartment, continuously flowing to the outside automobile with no contribution to heat exchanging of the second heat exchanger. Therefore, efficiency of the air conditioning and heating system is greatly decreased. Accordingly, the air conditioning and heating stages with the outside air inlet mode can not be maintained in a long time when the outside air is hot (in the air conditioning stage) or cold (in the heat stage).

Furthermore, another prior art of the automotive air conditioning and heating system is disclosed in Japanese Patent Application JP-A-62-181909. In above prior art, the automotive air conditioning and heating system includes a heat pump circuit. When the heat pump circuit is used for the heating system, the first heat exchanger which is disposed in the inside passenger compartment is used as a condenser, and the second heat exchanger which is disposed in the engine compartment is used as a evaporator. however, it is required to maintain effective heat exchanging of the second heat exchanger even when temperature of the outside air is low. Therefore, the mechanism for conducting air to the second heat exchanger is complicated due to providing hot air generated by the engine to the second heat exchanger to heat exchange with thereto.

The JP-A-57-178913 describes an air-conditioning system for a vehicle operable in a warming and in a cooling mode. This document discloses a refrigerating circuit provided with passages and switching doors. These switching doors can be positioned such that either warm air from the outside is cooled and guided into the interior of the car, or cold air from outside is heated and guided to the interior of the car. This system, however, requires a complicated mechanism for appropriately positioning the switching doors, and the actual location of the several inlets and outlets required remains obscure.

The US-A-4,412,425 describes an air conditioning and ventilation system for a motor car which has heat exchangers positioned in the front or the back of the passenger compartment. This document describes a method of reducing the thermal load on the heating and cooling system by mixing different air flows before the air is guided through the heat exchanger.

The US-A-4,688,394, finally, describes as defined by the features of the preamble of claim 1 a closed circuit reversible heat pump in which a single heat exchanger selectively functions as evaporator and condenser. An air conditioning system realized by this heat pump circuit, however, will suffer the same disadvantages as described above, with a permanent flow of outside air to be cooled exercising a heavy load upon the circuit.

Accordingly, it is an object of this invention to improve the efficiency of an automotive air conditioning and heating system with a simple mechanism.

This problem is solved by the automotive air conditioning system as described in claim 1.

Preferred embodiments will be described in the subclaims.

A more complete appreciation of the present invention and many of the attendant advantages thereof will be readily obtained as the invention becomes better understood from the following detailed description with reference to the attached drawings.

Figure 1 is a schematic illustration of a conventional type of an automotive air conditioning and heating system.

Figure 2 is a schematic illustration of an automotive air conditioning and heating system in accordance with one embodiment of the present invention.

Figure 3 is an partially enlarged schematic illustration of the automotive air conditioning and heating system shown in Figure 2.

Figure 4 is a block diagram of a heat pump circuit used for the automotive air conditioning and heating system shown in Figure 2.

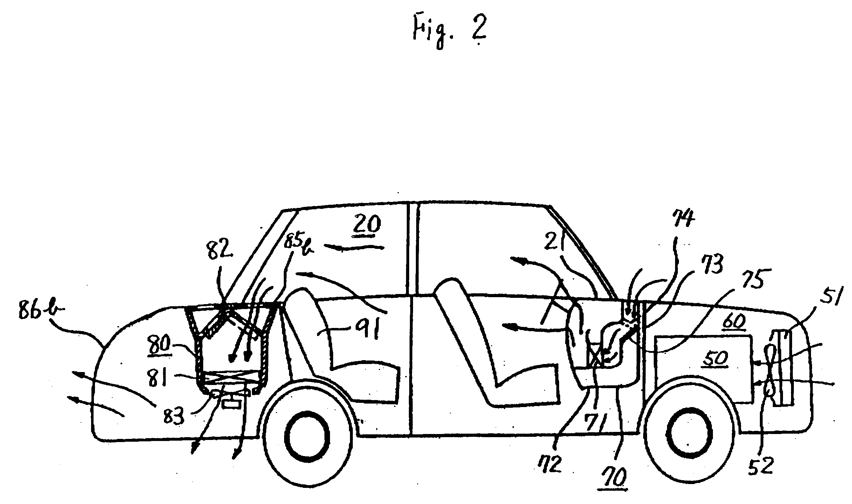

An automotive air conditioning and heating system in accordance with one embodiment is schematically illustrated in Figure 2.

With reference to Figure 2, first heat exchanger 71 is disposed in passenger compartment 20 of an automobile, more precisely, in first duct assembly 70 which is located under dashboard 21 of the automobile. First duct assembly 70 includes duct 72 in which first heat exchanger 71, damper 73 and a blower (not shown) are disposed in. Damper 73 selectively opens and closes first outside air inlet opening 74 and first passenger compartment air inlet opening 75 by pivoting thereof. In Figure 2, damper 73 closes first passenger compartment air inlet opening 75, that is, opens first outside air inlet opening 74. Therefore, the blower is only used for introducing the outside air into duct 72 through first outside air inlet opening 74.

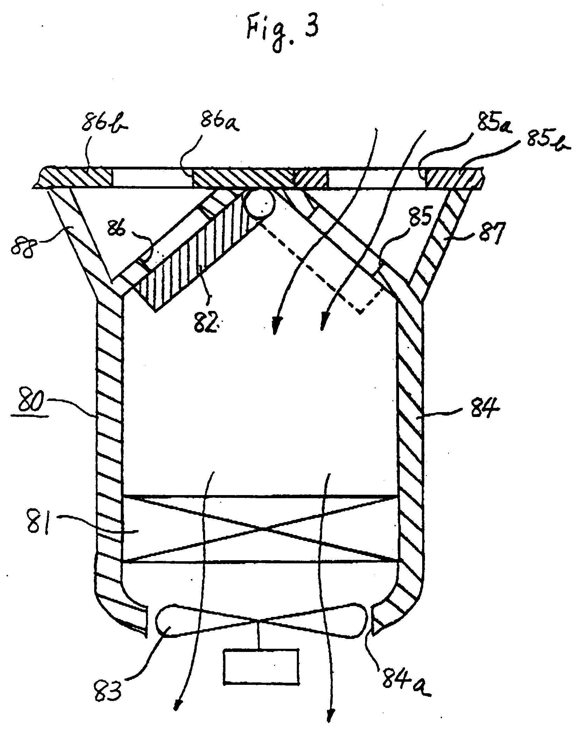

With reference to Figure 3 additionally, second heat exchanger 81 is disposed in trunk compartment defined at a rear portion of the automobile, more precisely, in second duct assembly 80 which is located behind rear seat 91 of the automobile. Second duct assembly 80 includes damper 82, motor fan 83 and casing 84 in which second heat exchanger 81 is disposed in. Large opening 84a is formed at a bottom of casing 84 to dispose motor fan 83 therein. A top of casing 84 is shaped to have two slanted surfaces, that is, a gable roof. Second passenger compartment air inlet opening 85 is formed at the front (to the right in Figure 3) slanted top. Second outside air inlet opening 86 is formed at the rear (to the left in Figure 3) slanted top.

Openings 85a, 86a are formed at rear tray 85b and trunk lid 86b respectively. Duct 87 air-tightly links second passenger compartment air inlet opening 85 to opening 85a. Duct 88 air-tightly links second outside air inlet opening 86 to opening 86a. Ducts 87, 88 and casing 84 are formed in one body. Damper 82 selectively opens and closes second passenger compartment air inlet opening 85 and second outside air inlet opening 86 by pivoting thereof. In Figure 3, damper 82 closes second outside air inlet opening 86, that is, opens second passenger compartment air inlet opening 85. Therefore, motor fan 83 is only used for introducing the passenger compartment air into casing 84 through opening 85a and second passenger compartment air inlet opening 85. However, when damper 82 closes second passenger compartment air inlet opening 85, that is, opens second outside air inlet opening 86 a illustrated by a dashed line in Figure 3, motor fan 83 is only used for introducing the outside air into casing 84 through opening 86a and second outside air inlet opening 86.

A driving device (not shown) is connected to damper 82 to make damper 82 pivot as follows. When the automotive air conditioning and heating system operates with the outside air inlet mode, damper 82 closes second outside air inlet opening 86, that is, opens second passenger compartment air inlet opening 85. The other hand, when the automotive air conditioning and heating system operates with the passenger compartment air inlet mode, damper 82 closes second passenger compartment air inlet opening 85, that is, opens second outside air inlet opening 86. Furthermore, when at least one of doors of the automobile is worked, damper 82 opens second passenger compartment air inlet opening 85 to avoid passengers feeling discomfort, for example, an earache of the passengers due to quickly rising or falling pressure in passenger compartment 20.

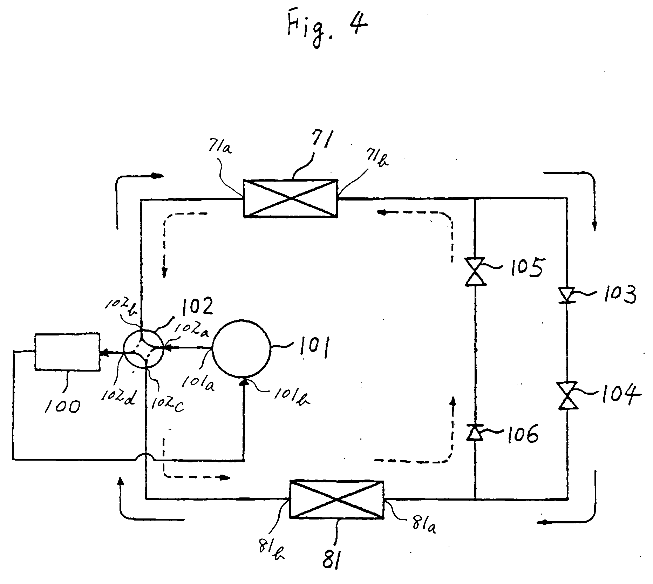

The above-mentioned automotive air conditioning and heating system further includes a heat pump circuit diagrammatically illustrated in Figure 4.

With reference to Figure 4, the heat pump circuit includes first heat exchanger 71, second heat exchanger 81, accumulator 100, compressor 101 and four-way valve 102. First , second, third and fourth openings 102a, 102b, 102c, and 102d of four-way valve 102 are connected to a discharge port of compressor 101, first heat exchanger 71, second heat exchanger 81 and an inlet port of accumulator 100 respectively. An outlet port of accumulator 100 is connected to a suction port of compressor 101. First check valve 103 and first expansion valve 104 are disposed between first and second heat exchangers 71, 81 in series. Second check valve 106 and second expansion valve 105 are also disposed between first and second heat exchangers 71, 81 in series. Therefore, first check valve 103 and first expansion valve 104 are in parallel with second check valve 106 and second expansion valve 105. In Figure 4, the dashed arrows indicates the flow of refrigerant as the heat pump circuit is used for the air conditioning system, and the solid arrows indicates the flow of refrigerant as the heat pump is used for heating system.

In operation, when passenger compartment 20 is demanded to cool, the heat pump circuit is used for the air conditioning system to appropriate link each elements of the circuit by using four-way valve 102. Furthermore, damper 73 of first duct assembly 70 closes first passenger compartment air inlet opening 75, that is, opens first outside air inlet opening 74. Simultaneously, damper 82 of second duct assembly 80 closes second outside air inlet opening 86, that is, opens second passenger compartment air inlet opening 85. Accordingly, the outside air is continuously introduced into duct 72 through first outside air inlet opening 74 and is passed through first heat exchanger 71 as an evaporator by operation of the blower. Consequently, the outside air is heat exchanged with the refrigerant in first heat exchanger 71, that is, the refrigerant in first heat exchanger 71 is vaporized by absorbing heat thereto from the outside air. In result, the outside air is cooled and blown into passenger compartment 20, thereby passenger compartment 20 being cooled. Then, the air in passenger compartment 20 is continuously flowed to casing 84 of second duct assembly 80 via duct 87 and then heat exchanged with the refrigerant in second heat exchanger 81 as a condenser, that is, the refrigerant in second heat exchanger 81 is condensed by radiating heat thereof to the passenger compartment air in casing 84. Finally, the heat exchanged air is continuously flowed to the outside automobile.

The other hand, when passenger compartment 20 is demanded to warm, the heat pump circuit is used for the heating system to appropriate link each elements of circuit by using four-way valve 102. But, dampers 73, 82 are still maintained their position as described above. Accordingly, the outside air is continuously introduced into duct 72 through first outside air inlet opening 74 and is passed through first heat exchanger 71 as a condenser by operation of the blower. Consequently, the outside air is heat exchanged with the refrigerant in first heat exchanger 71, that is, the refrigerant in first heat exchanger 71 is condensed by radiating heat thereof to the outside air in duct 72. In result, the outside air is warmed and blown into passenger compartment 20, thereby passenger compartment 20 being warmed. Then the air in passenger compartment 20 is continuously flowed to the casing 84 or second duct assembly 80 via duct 87 and then heat exchanged with the refrigerant in second heat exchanger 81 as an evaporator, that is, the refrigerant in second heat exchanger 81 is vaporized by absorbing heat thereto from the passenger compartment air. Finally, the heat exchanged air is continuously flowed to the outside automobile.

Accordingly, in the present invention, the second heat exchanger can maintain effective heat exchanging due to refrigerant in the second heat exchanger heat exchanging with the passenger compartment air which is relatively cooler (in the air conditioning stage) or hotter ( in the heating stage) than the outside air. Therefore, even when the air conditioning and heating system operates in the outside air inlet mode, the air conditioning and heating system operates efficiently, thereby the air conditioning and heating stage with outside air inlet mode being able to be used in a long time. Besides, effective heat exchanging of the second heat exchanger can be maintained with the simple mechanism which conducts air to the second heat exchanger.

Furthermore, in this embodiment, a position of damper 82 of second duct assembly 80 is changed to have only two locations, one of which is to close second passenger compartment air inlet opening 85, another of which is to close second outside air inlet opening 86. However, the damper may be changed its position continuously, that is, the damper may change its position from closing the second outside air inlet opening to closing the second passenger compartment air inlet opening.

Still furthermore, the present invention can be used for an electric automobile as well as an internal-combustion engine type of an automobile.

## Claims

1. An automotive air conditioning system for controlling the temperature of a vehicle passenger compartment, said air conditioning system being capable of operating in a cooling and in a heating mode, and including a heat pump circuit comprising first and second heat exchangers (71,81) and first duct means (72) for conducting air from said first heat exchanger (71) to said passenger compartment during said cooling mode and for conducting air from said first heat exchanger (71) to said passenger compartment during said heating mode,
characterized by
second duct means (80) separate from said first duct means (72) for conducting air from said passenger compartment to said second heat exchanger (81), said first duct means (72) being in the front of the passenger compartment and the second duct means (80) being located behind the rear seat of the passenger compartment.

2. The automotive air conditioning and heating system of claim 1, wherein
said second duct means (80)
includes an outside air inlet path (88) which conducts an outside air to said second heat exchanger (81)
and a passenger compartment air conducting path (87) which conducts the passenger compartment air to said second heat exchanger (81) and
said automotive air conditioning and heating system comprises a means (82) for selectively opening and closing said outside air inlet path (88) and said passenger compartment air conducting path (87).

3. The automotive air conditioning and heating system of claim 1 or 2, wherein said first heat exchanger (71) is disposed in said passenger compartment.

4. The automotive air conditioning and heating system according to one of claims 1 to 3, wherein said second heat exchanger (81) is disposed in an outside passenger compartment.

5. The automotive air conditioning and heating system according to one of claims 1 to 3, wherein said second heat exchanger (81) is disposed in a trunk compartment of an automobile.

6. The automotive air conditioning and heating system according to one of claims 2 to 5, wherein said outside air inlet path (88) and said passenger compartment air conducting path (87) are selectively opened and closed by a damper (82).

## Patentansprüche

1. Kraftfahrzeugklimaanlage zum Steuern der Temperatur eines Kraftfahrzeugraumes, wobei die Klimaanlage in einem Kühl- und Heizmodus betrieben werden kann, mit einem Wärmepumpenkreislauf mit einem ersten und einem zweiten Wärmetauscher (71, 81) und einer ersten Leitungsvorrichtung (72) zum Führen von Luft von dem ersten Wärmetauscher (71) zu dem Fahrgastraum während des Kühlmodus und zum Führen von Luft von dem ersten Wärmetauscher (71) zu dem Fahrgastraum während des Heizmodus,
gekennzeichnet durch
eine zweite Leitungsvorrichtung (80), die von der ersten Leitungsvorrichtung (72) getrennt ist, zum Führen von Luft von dem Fahrgastraum zu dem zweiten Wärmetauscher (81), wobei die erste Leitungsvorrichtung (72) vorn im Fahrgastraum vorgesehen ist und die zweite Leitungsvorrichtung (80) hinter dem Rücksitz des Fahrgastraumes vorgesehen ist.

2. Kraftfahrzeugklimaanlagen- und Heizsystem nach Anspruch 1, bei dem
die zweite Leitungsvorrichtung (80) einen Außenlufteinlaßweg (88), der Außenluft zu dem zweiten Wärmetauscher (81) führt, und einen Fahrgastraumluftleitweg (87), der Fahrgastraumluft zu dem zweiten Wärmetauscher (81) führt, aufweist und das Kraftfahrzeugklimaanlagen- und Heizsystem eine Vorrichtung (82) zum selektiven Öffnen und Schließen des Außenlufteinlaßweges (88) und des Fahrgastraumluftleitweges (87) aufweist.

3. Kraftfahrzeugklimaanlagen- und Heizsystem nach Anspruch 1 oder 2, bei dem der erste Wärmetauscher (71) in dem Fahrgastraum vorgesehen ist.

4. Kraftfahrzeugklimaanlagen- und Heizsystem nach einem der Ansprüche 1 bis 3, bei dem der zweite Wärmetauscher (81) außerhalb des Fahrgastraumes vorgesehen ist.

5. Kraftfahrzeugklimaanlagen- und Heizsystem nach einem der Ansprüche 1 bis 3, bei dem der zweite Wärmetauscher (81) in einem Kofferraum eines Automobiles vorgesehen ist.

6. Kraftfahrzeugklimaanlagen- und Heizsystem nach einem der Ansprüche 2 bis 5, bei dem der Außenlufteinlaßweg (88) und der Fahrgastraumluftleitweg (87) durch eine Luftklappe (82) selektiv geöffnet und geschlossen werden.

## Revendications

1. Système de conditionnement d'air automobile pour commander la température d'un habitacle de véhicule automobile, ledit système de conditionnement d'air étant capable de fonctionner dans un mode de refroidissement et de chauffage, et comprenant un circuit de pompe à chaleur, comportant un premier et un second échangeurs de chaleur (71, 81), et
un premier moyen de gaine (72) pour conduire l'air depuis ledit premier échangeur thermique (71) jusgu'audit habitacle, au cours dudit mode de refroidissement et pour conduire l'air depuis ledit premier échangeur thermique (71) jusqu'audit habitacle, au cours dudit mode de chauffage,
caractérisé par
un second moyen de gaine (80) distinct dudit premier moyen de gaine (72) pour conduire l'air depuis ledit habitacle jusqu'audit second échangeur thermique (81), ledit premier moyen de gaine (72) étant à l'avant de l'habitacle et le second moyen de gaine (80) étant situé derrière le siège arrière de l'habitacle.

2. Système de conditionnement d'air et de chauffage automobile selon la revendication 1, dans lequel
ledit second moyen de gaine (80)
comporte un passage d'arrivée d'air extérieur (88), qui conduit un air extérieur jusqu'audit second échangeur thermique (81)
et un passage conducteur (87) de l'habitacle, qui conduit l'air depuis l'habitacle jusqu'audit second échangeur thermique (81) et
ledit système de conditionnement d'air et de chauffage automobile comprend un moyen (82) pour ouvrir et fermer de façon sélective ledit passage d'arrivée d'air extérieur (88) et ledit passage conducteur d'air (87) de l'habitacle.

3. Système de conditionnement d'air et de chauffage automobile selon les revendications 1 ou 2, dans lequel un premier échangeur thermique (71) est placé dans ledit habitacle.

4. Système de conditionnement d'air et de chauffage automobile selon l'une quelconque des revendications 1 à 3, dans lequel ledit second échangeur thermique (81) est placé dans un compartiment extérieur à l'habitacle.

5. Système de conditionnement d'air et de chauffage automobile selon l'une quelconque des revendications 1 à 3, dans lequel ledit second échangeur thermique (81) est placé dans le coffre d'une automobile.

6. Système de conditionnement d'air et de chauffage automobile selon l'une des revendications 2 à 5, dans lequel ledit passage d'arrivée d'air extérieur (88) et ledit passage conduisant l'air et l'habitacle (87) sont ouverts et fermés de façon sélective par un amortisseur (82).
